# EUROPÄISCHE PATENTSCHRIFT

(11) **EP 3 665 891 B1**
(45) Veröffentlichungstag und Bekanntmachung des Hinweises auf die Patenterteilung: **16.09.2020**
(21) Anmeldenummer: 19720065.2
(22) Anmeldetag: 12.04.2019
(51) Int. Cl.: H04L 29/06, G06F 21/12

(54) **VERFAHREN ZUM FESTLEGEN EINES FUNKTIONSBESTANDS AKTIVIERTER FUNKTIONEN IN EINER FUNKTIONSEINHEIT SOWIE GEMÄSS DEM VERFAHREN BETREIBBARE FUNKTIONSEINHEIT**
METHOD FOR DETERMINING AN INVENTORY OF ACTIVATED FUNCTIONS IN A FUNCTIONAL UNIT AND A FUNCTIONAL UNIT OPERABLE IN ACCORDANCE WITH THE METHOD
PROCÉDÉ DE DÉTERMINATION D'UN INVENTAIRE DE FONCTIONS ACTIVÉES DANS UNE UNITÉ FONCTIONNELLE ET UNE UNITÉ FONCTIONNELLE OPÉRABLE CONFORMÉMENT À CE PROCÉDÉ

(30) Priorität: 04.05.2018 DE 102018206880
(43) Veröffentlichungstag der Anmeldung: 17.06.2020
(73) Patentinhaber: Audi AG, 85045 Ingolstadt (DE)
(72) Erfinder: MOCHAR, Patrick, 85057 Ingolstadt (DE); GRASSER, Christoph, 92339 Beilngries (DE); SCHALL, Erich, 85088 Vohburg (DE)
(86) Internationale Anmeldenummer: PCT/EP2019/059382
(87) Internationale Veröffentlichungsnummer: WO 2019/211080

(56) Entgegenhaltungen:
- DE-A1- 10 212 259
- DE-A1-102016 007 472
- US-A1- 2017 279 774

## Beschreibung

Die Erfindung betrifft ein Verfahren zum Festlegen oder Vorgeben eines Funktionsbestands aktiver Funktionen in einer Funktionseinheit. In der Funktionseinheit ist zumindest eine Funktion nachträglich freischaltbar und/oder nachinstallierbar, sodass der Bestand aktivierter Funktionen der Funktionseinheit verändert werden kann. Zu der Erfindung gehört auch eine Funktionseinheit mit veränderbarem Funktionsbestand.

Eine solche Funktionseinheit ist beispielsweise aus der DE 10 2009 025 585 A1 bekannt, wo als Funktionseinheit ein Kraftfahrzeug beschrieben ist. Um eine Funktion freizuschalten, ist es in der Regel notwendig, diese Funktion beim Hersteller der Funktionseinheit oder dem Lieferanten der Funktion zu bezahlen. Dies wird als Function-on-Demand-Funktionalität bezeichnet. Da aber die Funktionen bereits vorinstalliert sein können und nur noch das Freischalten beispielsweise mittels eines Freischaltcodes notwendig ist, versuchen Benutzer immer wieder, bei einer Funktionseinheit die Absicherung der vorinstallierten Funktion zu umgehen, um kostenlos in den Genuss einer vorinstallierten Funktion zu kommen. Da immer mehr Funktionen im Fahrzeug verbaut und nicht sofort aktiviert/freigeschaltet werden, sondern erst im Nachhinein bei nachträglicher Bezahlung aktiviert werden, entsteht ein ständiger Wettlauf zwischen den Herstellern, die versuchen, die nicht-aktivierten Funktionen gegen eine Umgehung der Zulässigkeitsbedingung (beispielsweise des Kaufs und/oder des Freischaltcodes) abzusichern, und solchen Benutzern (Hackern), die versuchen, die Absicherungen ohne Bezahlung zu umgehen. Dies ist möglich, da für das Aktivieren einer Funktion keine zusätzliche Hardware notwendig ist, damit eine Funktion online und digital, das heißt ohne physischen Kontakt beispielsweise in einer Werkstatt, erfolgen kann.

Durch diesen Wegfall der Weitergabe von physischen Komponenten steigt das Risiko, dass solche Funktionen aufgrund von Hackerangriffen unter Umgehung der vorgesehenen Zulässigkeitsbedingung (Kauf und/oder Freischaltcode) aktiviert werden, sodass ein Benutzer nicht für sie bezahlt und sie dennoch nutzt.

Aus der DE 10 2013 021 867 A1 ist bekannt, dass mittels des Freischaltens von Funktionen ein Kraftfahrzeug dahingehend personalisiert werden kann, dass der Funktionsbestand aktivierter Funktionen in Abhängigkeit davon festgelegt oder eingestellt wird, welcher Benutzer das Kraftfahrzeug aktuell benutzt. Der Benutzer muss sich hierzu bei einem Server des Internets anmelden, wenn er das Kraftfahrzeug benutzt. Dann wird in dem Kraftfahrzeug ein dem Benutzer zugeordneter Funktionsbestand eingestellt. Somit weist die Funktionseinheit diejenigen Funktionen auf, für die der Benutzer zuvor bezahlt hat. Dieser Ansatz ist allerdings sehr zentralistisch auf einen Server des Internets ausgelegt, sodass für den Fall, dass mehrere Funktionen unterschiedlicher Hersteller genutzt werden sollen, dies zu einer umständlichen Verwaltung in dem zentralen Server führen kann.

Aus der DE 10 2016 007 472 A1 ist bekannt, dass man in einer öffentlichen, dezentralen Blockchain Fahrzeugdaten speichern kann, um hierdurch diese Fahrzeugdaten manipulationssicher zu hinterlegen. Als Fahrzeugdaten können beispielsweise der Kilometerstand und der Aufenthaltsort hinterlegt werden. Da die Blockchain im Nachhinein nicht mehr manipuliert werden kann, kann ein Kilometerstand, wie er auf dem Tachometer des Kraftfahrzeugs angezeigt ist, mit dem Kilometerstand in der Blockchain verglichen werden, um eine Manipulation zur Verringerung des Kilometerstands zu erkennen. Hierdurch kann der Gebrauchtwagenhandel gegen Manipulation geschützt werden. Ein Schutz der Absicherung einer vorinstallierten Funktion gegen eine unautorisierte Freischaltung ist aber durch dieses Verfahren nicht gegeben.

Aus der US2017/279774 is bekannt, dass ein Gerät mit einem Sensor, welcher Echtzeitsensordaten mit einer hohen Datenrate erzeugen kann, ein Softwaremodul von einem externen Datenkonsumenten empfangen kann. Das Softwaremodul dient zur Vorverarbeitung der Sensordaten mit hoher Datenrate direkt an der Quelle, zu einem Datenstrom mit niedrigerer Datenrate bevor dieser Datenstrom an den externen Datenkonsumenten gesendet wird. Ein Bezahlmechanismus für diesen Datenvorverarbeitungs-Service des Gerätes wird in einer Blockchain verwaltet.

Der Erfindung liegt die Aufgabe zugrunde, bei einer Funktionseinheit, dessen Funktionsbestand aktivierter Funktionen durch Freischalten und/oder Nachinstallieren veränderbar ist, die Aktivierung einer solchen Funktion zu kontrollieren.

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figuren beschrieben.

Durch die Erfindung ist ein Verfahren zum Festlegen oder Einstellen eines Funktionsbestands der aktivierten Funktionen einer Funktionseinheit gegeben. Das Verfahren geht davon aus, dass in der Funktionseinheit zumindest eine bereits installierte Funktion freischaltbar ist und/oder zumindest eine Funktion nachinstallierbar ist. Mit anderen Worten ist die Funktionseinheit dazu eingerichtet, dass zumindest eine bereits installierte Funktion freigeschaltet wird und/oder zumindest eine Funktion nachinstalliert wird. Für das Nachinstallieren kann also entsprechender Speicherplatz vorgesehen sein. Durch das Freischalten und durch das Nachinstallieren wird die jeweilige Funktion jeweils aktiviert. Eine so aktivierte Funktion ist dann in der Funktionseinheit von einem Benutzer nutzbar oder sie wird dem Benutzer bereitgestellt. Eine nicht-aktivierte Funktion kann von einem Benutzer in der Funktionseinheit nicht genutzt werden. Die Menge der tatsächlich aktivierten Funktionen, die also von dem Benutzer in der Funktionseinheit nutzbar ist oder dem Benutzer bereitgestellt ist, wird im Folgenden als Funktionsbestand bezeichnet.

Bei dem Verfahren wird zumindest einmal (also einmal oder wiederholt) durch eine Steuereinrichtung der Funktionseinheit der aktuelle Funktionsbestand ermittelt und zu dem aktuellen Funktionsbestand eine Beschreibung erzeugt, die hier als Ist-Bestandsangabe bezeichnet ist und die den ermittelten Funktionsbestand beschreibt. Durch die Steuereinrichtung wird bei einer externen Servereinrichtung, beispielsweise einem Server des Internets, aus einem vorbestimmten Blockchain-Guthabenkonto eine Soll-Bestandsangabe betreffend einen Soll-Funktionsbestand abgefragt. Mit "extern" ist hier und im Weiteren "außerhalb der Funktionseinheit" gemeint. Die Soll-Bestandsangabe beschreibt also, welcher Funktionsbestand, nämlich der Soll-Funktionsbestand, in der Funktionseinheit eigentlich vorhanden sein sollte. Für den Fall, dass sich die ermittelte Ist-Bestandsangabe von der Soll-Bestandsangabe unterscheidet, wird eine vorbestimmte Forcierungsmaßnahme zum Vorgeben oder Einstellen des Soll-Funktionsbestand ausgelöst. Die Funktionseinheit reagiert also auf eine Abweichung der Ist-Bestandsangabe von der Soll-Bestandsangabe mit der Forcierungsmaßnahme. Da die Soll-Bestandsangabe in einem Blockchain-Guthabenkonto gespeichert ist, kann nur eine autorisierte Steuereinrichtung und/oder nur eine autorisierte Person, welche jeweils den sogenannten privaten kryptografischen Schlüssel (Private Key) für das Blockchain-Guthabenkonto bereitstellt, den Inhalt des Blockchain-Guthabenkontos verändern. Die Soll-Bestandsangabe lässt sich also nur manipulieren, wenn der private Schlüssel verwendet wird.

Durch die Erfindung ergibt sich der Vorteil, dass der Soll-Funktionsbestand der Funktionseinheit über ein Blockchain-Guthabenkonto festgelegt und in der Funktionseinheit forciert oder vorgegeben werden kann. Nur wer mittels des privaten Schlüssels Zugang zu einer Manipulation des Blockchain-Guthabenkontos hat, kann die Soll-Bestandsangabe verändern und damit den Soll-Funktionsbestand einstellen oder festlegen. Da das Blockchain-Guthabenkonto außerhalb der Funktionseinheit bereitgestellt ist, nutzt die vollständige Kontrolle über die Funktionseinheit nichts, um dessen Funktionsbestands zu manipulieren. Als Blockchain-Guthabenkonto kann beispielsweise ein Guthabenkonto in einer der folgenden Blockchains verwendet werden: Bitcoin, Etherium, Lightcoin. In dem Fall, dass es sich bei der Funktionseinheit um ein Kraftfahrzeug handelt, kann als Funktion beispielsweise zumindest eine der folgenden in Bezug die jeweilige Aktivierung kontrolliert werden: eine Matrix-Funktion eines Matrix-Scheinwerfers, ein Fahrerassistenzprogramm, eine Navigationsassistenz, eine Avatar-Assistenz, ein Internetbrowser, ein Motorsteuerungsprogramm.

Die Erfindung umfasst auch Ausführungsformen, durch die sich zusätzliche Vorteile ergeben.

Eine Ausführungsform sieht vor, dass zumindest einmal als Soll-Bestandsangabe eine gerätespezifische, benutzer-unabhängige Soll-Bestandsangabe bei einem Blockchain-Guthabenkonto der Funktionseinheit abgefragt wird. Mit anderen Worten wird ein Soll-Funktionsbestand forciert oder vorgegeben, der z.B. vom Hersteller der Funktionseinheit unabhängig davon, wer der Benutzer ist oder wer die Funktionseinheit benutzt, vorgegeben oder festgelegt wird. Hierdurch ergibt sich der Vorteil, dass ein original Herstellungszustand der Funktionseinheit und/oder ein Zustand der Funktionseinheit, wie er durch eine zertifizierte Werkstatt hergestellt wurde, garantiert werden kann. Es wird also eine Gerätemanipulation verhindert. Hierdurch kann beispielsweise ein Haftungsrisiko für den Hersteller verringert werden. Das Blockchain-Guthabenkonto kann dann beispielsweise nur vom Hersteller und/oder der zertifizierten Werkstatt verändert werden, das heißt der beschriebene private Schlüssel wird dann nur vom Hersteller und/oder der zertifizierten Werkstatt besessen. Beispielsweise kann in dem Fall, dass es sich bei der Funktionseinheit um ein Kraftfahrzeug handelt, eine Überlastung aufgrund einer Manipulation eines Motorsteuerungsprogramms verhindert werden und somit ein entsprechender Haftungsfall.

Eine Ausführungsform sieht vor, dass zumindest einmal als Soll-Bestandsangabe eine benutzerspezifische, bezüglich der Funktionseinheit ungebundene, d.h. für mehrere Funktionseinheiten gültige Soll-Bestandsangabe bei einem Blockchain-Guthabenkonto eines Benutzers der Funktionseinheit abgefragt wird. Mit anderen Worten wird geprüft, welcher Soll-Funktionsbestand dem Benutzer für die Funktionseinheit zusteht, weil es sich um einen Soll-Funktionsbestand handelt, der dem Benutzer gehört und/oder von diesem bezahlt wurde. Beispielsweise kann hierdurch ein Abomodell realisiert werden. Der Benutzer bekommt also durch das Verfahren in der Funktionseinheit denjenigen Funktionsbestand bereitgestellt, der gemäß der Soll-Bestandsangabe validiert oder vorgegeben ist. Wechselt der Benutzer von einer ersten Gerät zu einem zweiten Gerät, so kann der Soll-Funktionsbestand in dem ersten Gerät rückgängig gemacht oder deaktiviert werden und dafür in der zweiten Funktionseinheit, die der Benutzer aktuell benutzt, aktiviert oder eingestellt werden. Der Benutzer bekommt also seinen persönlichen Soll-Funktionsbestand gemäß der Soll-Bestandsangabe in zumindest zwei unterschiedlichen Funktionseinheit bereitgestellt, nämlich jeweils dann, wenn er die jeweilige Funktionseinheit benutzt.

Eine Ausführungsform sieht vor, dass die besagte Forcierungsmaßnahme umfasst, dass für den Fall, dass erkannt wird, das eine neue, von der Soll-Bestandsangabe nicht umfasste oder ausgeschlossene Funktion in der Funktionseinheit freigeschaltet und/oder installiert und damit jeweils aktiviert wurde, diese neue Funktion oder der (gesamte) aktuelle Funktionsbestand oder sogar der Betrieb der Funktionseinheit blockiert oder deaktiviert wird. Das Deaktivieren ausschließlich der neuen Funktion selbst stellt in vorteilhafter Weise sicher, dass die Funktionseinheit mit demjenigen Soll-Funktionsbestand weiter genutzt werden kann, der durch die Soll-Bestandsangabe validiert ist. Durch Deaktivieren des gesamten aktuellen Funktionsbestands wird dagegen die gesamte Function-on-Demand-Funktionalität deaktiviert. Hierdurch bleibt dann aber eine Basis-Funktionalität oder Grundfunktionalität der Funktionseinheit erhalten, die nicht Bestandteil der Function-on-Demand-Funktionalität ist. Durch Deaktivieren oder Blockieren des Betriebs des gesamten Geräts kann der Benutzer die Funktionseinheit nicht mehr benutzen. Hierdurch wird ein sicherer Zustand der Funktionseinheit garantiert.

Zusätzlich oder alternativ zu dem beschriebenen Deaktivieren kann bei dem beschriebenen Erkennen der neuen Funktion eine Nachricht betreffend eine unzulässige Aktivierung der neuen Funktion und/oder betreffend die neue Funktion selbst an eine vorbestimmte, externe Empfangsstelle ausgesendet werden. Eine solche Empfangsstelle kann beispielsweise ein Internet-Server des Geräteherstellers und/oder ein Internet-Server des Funktionsherstellers sein. Hierdurch wird sichergestellt, dass im Falle einer Inanspruchnahme beispielsweise einer Garantie oder bei einem Schadensersatzanspruch der jeweilige Hersteller über die Manipulation der Funktionseinheit bereits informiert ist.

Eine Ausführungsform sieht vor, dass für den Fall, dass eine bisher vom aktuellen Funktionsbestand der Funktionseinheit ausgeschlossene neue Funktion unter Einhaltung einer vorbestimmten Zulässigkeitsbedingung freigeschaltet und/oder neu installiert und damit jeweils aktiviert wird, hierzu auch eine aktualisierte Soll-Bestandsangabe erzeugt und in dem Blockchain-Guthabenkonto abgespeichert wird. Das Blockchain-Guthabenkonto wird also aktualisiert oder an den erweiterten oder reduzierten Funktionsbestand angepasst. Die Zulässigkeitsbedingung definiert dabei, wann eine Funktion zulässig aktiviert wird. Beispielsweise kann die Zulässigkeitsbedingung überprüfen, ob ein vorbestimmter Freischaltcode für die neue Funktion in der Funktionseinheit bereitgestellt oder eingegeben worden ist. Bei zulässigem Freischaltcode ist die Zulässigkeitsbedingung erfüllt. Das Blockchain-Guthabenkonto reflektiert dann den neuen Funktionsbestand durch die abgespeicherte neue Soll-Bestandsangabe. Somit wird bei einer erneuten Überprüfung des Funktionsbestands die neue Funktion akzeptiert und es kommt nicht zu dem beschriebenen Deaktivieren der neuen Funktion durch die Forcierungsmaßname.

Eine Ausführungsform sieht vor, dass die Forcierungsmaßnahme erst bei Erkennen eines vorbestimmten Ruhezustands der Funktionseinheit durchgeführt wird. Ein solcher Ruhezustand kann beispielsweise vorliegen, wenn die Funktionseinheit in einem Standby-Modus ist. Mit anderen Worten ist sichergestellt, dass ein Benutzer die Funktionseinheit gerade nicht verwendet oder benutzt. Im Falle eines Kraftfahrzeugs kann der Ruhezustand beispielsweise ein Parkzustand sein, in welchem das Kraftfahrzeug geparkt ist, also insbesondere eine Antriebseinheit des Kraftfahrzeugs ausgeschaltet ist. Hierdurch ergibt sich der Vorteil, dass durch das Verändern des Funktionsbestands, wie er beispielsweise durch das beschriebene Deaktivierten erfolgt, ein Benutzer nicht durch das veränderte Verhalten der Funktionseinheit überrascht wird.

Eine Ausführungsform sieht vor, dass das Erzeugen der Ist-Bestandsangabe und/oder das Abfragen der Soll-Bestandsangabe nicht nur einmal, sondern wiederholt zu vorbestimmten Zeitpunkten durchgeführt werden. Zumindest ein Zeitpunkt ergibt sich dabei, falls eine Online-Verbindung der Steuereinrichtung bestimmt (diese also die geräteexterne Servereinrichtung für das Blockchain-Guthabenkonto per Internet erreichen kann) und/oder falls die Funktionseinheit in Betrieb genommen wird (also bei einer jeweiligen oder jeder Inbetriebnahme) und/oder falls ein vorbestimmtes Zeitintervall vergangen ist (also jeweils nach einer vorbestimmten Zeitdauer) und/oder falls eine Zufallsfunktion ein vorbestimmtes Ergebnis erzeugt (also sporadisch). Falls also zumindest eine Funktion ohne Autorisierung in der Funktionseinheit betrieben wird, wird dies spätestens bei dem nächsten Bestehen einer Online-Verbindung und/oder bei der nächsten Inbetriebnahme und/oder nach Ablauf des vorbestimmten Zeitintervalls und/oder für den Benutzer unvorhersagbar gemäß der Zufallsfunktion erkannt. Dadurch kann sich ein Benutzer nicht durch einmaliges Überwinden der Absicherung einer Funktion diese ohne Bezahlung oder allgemein ohne Erfüllung der Zulässigkeitsbedingung beschaffen.

Eine Ausführungsform sieht vor, dass die Ist-Bestandsangabe und die Soll-Bestandsangabe jeweils als ein Hashwert (Prüfsumme) vorgesehen sind. Der Hashwert wird zu einer jeweiligen Funktionsliste erzeugt. Diese Funktionsliste gibt die gemäß dem aktuellen Funktionsbestand für die Ist-Bestandsangabe und gemäß dem Soll-Funktionsbestand für die Soll-Bestandsangabe vorhandenen Funktionsbezeichnungen der aktivieren Funktionen an. Durch Verwendung eines Hashwerts oder einer Prüfsumme ergibt sich der Vorteil, dass die Überprüfung eines einzigen Werts ausreicht, um den gesamten Funktionsbestand der Funktionseinheit zu prüfen. Entsprechend wenig Daten müssten somit zwischen dem Blockchain-Guthabenkonto und der Steuereinrichtung der Funktionseinheit ausgetauscht werden.

Wie bereits ausgeführt, ist das Verfahren für unterschiedliche Gerätetypen verwendbar. Eine jeweilige Ausführungsform sieht vor, dass als Gerät ein Kraftfahrzeug oder ein Smartphone oder ein Tablet-PC oder eine Smartwatch oder ein Personalcomputer betrieben wird. Bei diesen Gerätetypen ist in Bezug auf die Ausstattung der Hardware die Verwendung der Function-on-Demand-Funktionalitäten vorteilhaft. Somit können diese Gerätetypen durch das erfindungsgemäße Verfahren gegen die Umgehung der beschriebenen Zulässigkeitsbedingung geschützt werden.

Die Erfindung umfasst auch eine Funktionseinheit, die zum Durchführen des Verfahrens eingerichtet ist. Die Funktionseinheit ist also dazu eingerichtet, dass in der Funktionseinheit zumindest eine bereits installierte Funktion freischaltbar ist oder sich freischalten lässt und damit jeweils aktivierbar ist oder sich aktivieren lässt und/oder dass zumindest eine Funktion nachinstallierbar ist oder sich nachinstallieren lässt und damit jeweils aktivierbar ist oder sich aktivieren lässt. Der Funktionsbestand der Funktionseinheit stellt dabei in der beschriebenen Weise die Menge der tatsächlich aktivierten Funktionen dar. Der Funktionsbestand ist also die aus Sicht des Benutzers der Funktionseinheit verfügbare Menge der aktivierten Funktionen. Die erfindungsgemäße Funktionseinheit ist dazu eingerichtet, eine Ausführungsform des erfindungsgemäßen Verfahrens durchzuführen. Hierzu kann in der Funktionseinheit die beschriebene Steuereinrichtung zum Durchführen der Verfahrensschritte realisiert sein. Die Steuereinrichtung kann hierbei als ein Programmcode für eine Prozessoreinrichtung der Funktionseinheit ausgestaltet sein. Die Funktionseinheit kann somit insbesondere eine Prozessoreinrichtung aufweisen, die zumindest einen Mikroprozessor und/oder zumindest einen Mikrocontroller aufweisen kann. Es kann ein Programmcode bereitgestellt sein, der Programminstruktionen aufweist, die bei Ausführen durch die Prozessoreinrichtung die Ausführungsform des Verfahrens durchführen. Der Programmcode kann in einem Datenspeicher der Prozessoreinrichtung gespeichert sein.

Die erfindungsgemäße Funktionseinheit ist bevorzugt als Kraftfahrzeug, insbesondere als Kraftwagen, zum Beispiel Personenkraftwagen oder Lastkraftwagen, ausgestaltet. Die erfindungsgemäße Funktionseinheit kann aber auch als Smartphone oder Tablet-PC oder Smartwatch oder Personalcomputer ausgestaltet sein, um nur beispielhaft einige weitere Gerätetypen zu nennen. Es kann sich bei der Funktionseinheit aber auch z.B. um ein Softwareprodukt, d.h. eine Anwendungssoftware, oder um einen Serverdienst oder Internetdienst handeln.

Die Erfindung umfasst auch Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung einer Ausführungsform der erfindungsgemäßen Funktionseinheit; und
- Fig. 2: ein Ablaufdiagramm zu einer Ausführungsform des erfindungsgemäßen Verfahrens, wie es in der Funktionseinheit von Fig. 1 ausgeführt werden kann.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

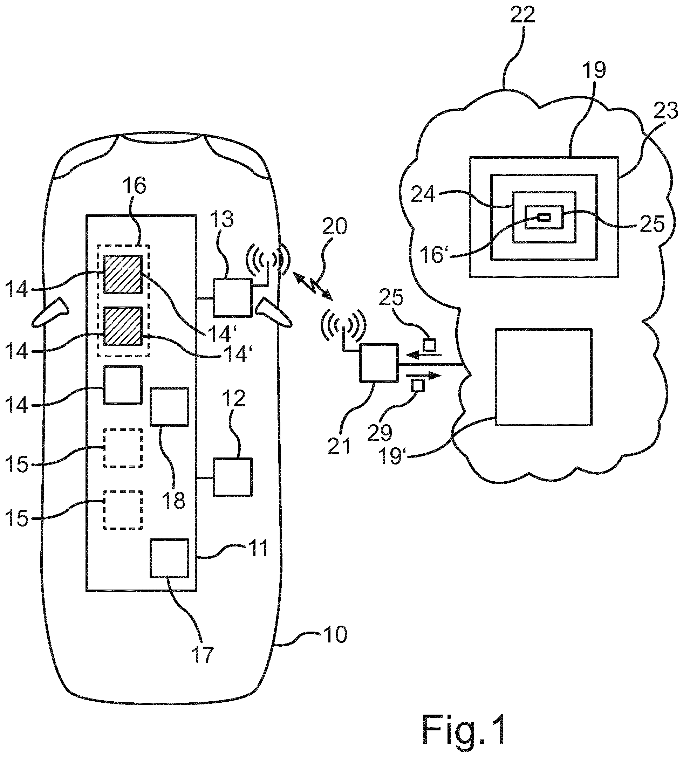

Fig. 1 zeigt eine Funktionseinheit 10, bei der es sich beispielsweise um ein Kraftfahrzeug handeln kann. Von der Funktionseinheit sind eine Prozessoreinrichtung 11, eine Bedieneinrichtung 12 und eine Kommunikationseinrichtung 13 dargestellt, die jeweils beispielsweise in der Funktionseinheit 10 vorgesehen sein können. Die Funktionseinheit 10 kann zumindest eine vorinstallierte Funktion 14 aufweisen und/oder zumindest eine nachinstallierbare Funktion 15 vorsehen oder zulassen. Bei den Funktionen 14, 15 kann es sich jeweils um Softwarefunktionen oder Programmcode-basierte Funktionen handeln, die durch die Prozessoreinrichtung 11 realisiert oder bereitgestellt sein können. Die Prozessoreinrichtung 11 kann hierzu zumindest einen Mikroprozessor und/oder zumindest einen Mikrocontroller umfassen. Die Prozessoreinrichtung 11 kann beispielsweise durch ein Steuergerät oder durch einen Verbund mehrerer Steuergeräte realisiert sein. Ein Benutzer der Funktionseinheit 10 kann die Funktionen 14, 15 für den Fall, dass sie aktiviert sind, also in der Funktionseinheit 10 tatsächlich installiert und zudem freigeschaltet sind, benutzen. Beispielsweise kann der Benutzer mittels der Bedieneinrichtung 12 jeweils eine Funktion auswählen und deren Durchführung auslösen. Die Bedieneinrichtung 12 kann hierzu in an sich bekannter Weise ausgestaltet sein, beispielsweise einen Touchscreen aufweisen und/oder zumindest eine Taste. Von den vorinstallierten Funktionen 14 müssen aber nicht alle tatsächlich aktiviert oder freigeschaltet sein. Es ergibt sich somit ein Funktionsbestand 16 der tatsächlich freigeschalteten und damit aktivierten Funktionen 14'. Wird eine nachinstallierbare Funktion 15 tatsächlich installiert und dann aktiviert, so gehört auch diese zum Funktionsbestand 16.

Damit eine Funktion aktiviert wird und damit zum Funktionsbestand 16 gehört, kann vorgesehen sein, dass der Benutzer die jeweilige Funktion bezahlen muss oder kaufen muss. Ob eine Funktion zulässig aktiviert wurde, kann durch die Funktionseinheit, beispielsweise die Prozessoreinrichtung, mittels einer vorbestimmten Zulässigkeitsbedingung 17 geprüft werden, die beispielsweise das Verifizieren eines Freischaltcodes umfassen oder vorsehen kann.

Falls ein Benutzer versucht, eine Funktion zu aktivieren und damit den Funktionsbestand 16 zu erweitern, ohne für diese Funktion tatsächlich zu bezahlen, so wird die Zulässigkeitsbedingung 17 für diese Funktion verletzt.

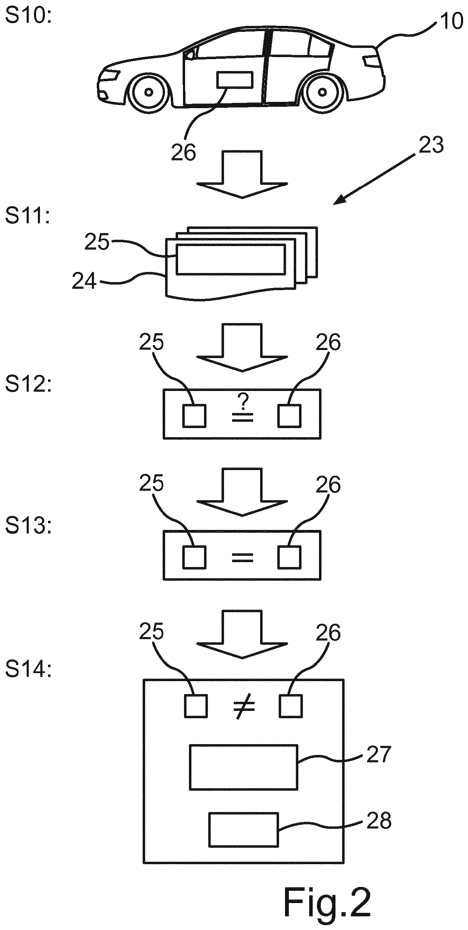

Bei der Funktionseinheit 10 wird dies mittels eines Verfahrens erkannt, das im Zusammenhang mit Fig. 1 und Fig. 2 im Folgenden beschrieben ist. Das Verfahren kann durch eine Steuereinrichtung 18 durchgeführt werden, die in der Funktionseinheit 10 beispielsweise mittels der Prozessoreinrichtung 11 realisiert sein kann. Das Verfahren kann die Kommunikationseinrichtung 13 nutzen. Die Kommunikationseinrichtung 13 kann beispielsweise ein Mobilfunkmodul und/oder ein WLAN-Funkmodul (WLAN - Wireless Local Area Network) nutzen. Mittels der Kommunikationseinrichtung kann eine Kommunikationsverbindung zu einer externen Servereinrichtung 19 bereitgestellt werden. Die Kommunikationsverbindung kann beispielsweise eine Funkverbindung 20 zwischen der Kommunikationseinrichtung 13 und einer externen Kommunikationseinrichtung 21, beispielsweise einem Mobilfunknetzwerk oder einem WLAN-Router, vorsehen. Die Funkverbindung 20 repräsentiert eine Online-Verbindung. Die Servereinrichtung 19 kann Bestandteil des Internets 22 sein. Die Servereinrichtung 19 kann eine Blockchain 23 bereitstellen oder betreiben, die Bestandteil eines öffentlichen, dezentralen Blockchain-Systems, beispielsweise für eine kryptografische Währung (zum Beispiel Bitcoin oder Etherium oder Lightcoin) sein kann. Durch die Blockchain 23 kann ein Blockchain-Guthabenkonto 24 verwaltet werden. Es kann sich um ein Blockchain-Guthabenkonto 24 für die Funktionseinheit 10 oder für einen Benutzer der Funktionseinheit 10 handeln. In dem Blockchain-Guthabenkonto 24 kann eine Soll-Bestandsangabe 25 betreffend einen Soll-Funktionsbestand 16' gespeichert sein.

Es ist eine weiterer Servereinrichtung 19' dargestellt, der eine Empfangsstelle repräsentiert.

In Fig. 2 ist symbolisch dargestellt, dass durch die Steuereinrichtung 18 in einem Schritt S10 zu dem aktuellen, tatsächlichen Funktionsbestand 16 der Funktionseinheit 10 eine Ist-Bestandsangabe 26 erzeugt werden kann. Es kann sich hierbei um eine Funktionsliste der aktiven Funktionen oder um einen Hashwert, welcher diese Funktionsliste repräsentieren kann, handeln. In der Blockchain 23 kann in einem Schritt S11 das Blockchain-Guthabenkonto 24 identifiziert werden und aus dem Blockchain-Guthabenkonto 24 die Soll-Bestandsangabe 25 betreffend den Soll-Funktionsbestand 16' ausgelesen oder abgefragt werden.

In einem Schritt S12 können die Ist-Bestandsangabe 26 und die Soll-Bestandsangabe 25 verglichen werden. Falls als jeweilige Bestandsangabe beispielsweise ein Hashwert verwendet wird, können diese beiden Hashwerte verglichen werden.

In einem Schritt S13 kann festgestellt werden, dass die beiden Bestandsangaben (Soll-Bestandsangabe 25 und Ist-Bestandsangabe 26) übereinstimmen. Dann kann die Funktionseinheit 10 ohne weitere Einschränkung genutzt werden.

Wird dagegen in einem Schritt S14 festgestellt, dass die Ist-Bestandsangabe unterschiedlich ist zu der Soll-Bestandsangabe, so kann in einer optionalen zusätzlichen Prüfung überprüft werden, ob der Benutzer eine zusätzliche Funktion 14 freigeschaltet und/oder eine zusätzliche Funktion 15 neu installiert hat. Ist dies nicht der Fall, so kann im Schritt S14 eine Forcierungsmaßnahme 27 eingeleitet werden. Diese kann beispielsweise darin bestehen, dass eine nicht vom Benutzer gekaufte oder allgemein gemäß der Zulässigkeitsbedingung 17 aktivierte Funktion deaktiviert wird. Hierdurch wird in der Funktionseinheit 10 verhindert, dass eine nicht gemäß der Zulässigkeitsbedingung 17 aktivierte neue Funktion genutzt werden kann.

Das Verfahren kann aber auch für eine Unterstützung eines Benutzers beim Anpassen der Funktionseinheit 10 an einen Soll-Funktionsbestand 16' genutzt werden, wie er in einem Blockchain-Guthabenkonto 24 des Benutzers unabhängig von der Funktionseinheit, also für mehrere unterschiedliche Funktionseinheiten, vorgesehen sein kann. Als Soll-Bestandsangabe 25 kann in dem Blockchain-Guthabenkonto 24 des Benutzers somit ein Soll-Funktionsbestand 16' der vom Benutzer in mehreren Funktionseinheiten zulässigen Funktionen gespeichert sein. Für jede der Funktionseinheiten kann derselbe Soll-Funktionsbestand 16' vorgesehen sein. Dann wird also die Funktionseinheit 10 durch das Verfahren automatisiert an den Benutzer angepasst. Die Forcierungsmaßnahme 27 kann dabei vorsehen, dass zumindest eine vorinstallierte Funktion 14 gemäß der Soll-Bestandsangabe 25 aktiviert und/oder zumindest eine deaktiviert wird und/oder zumindest eine neue Funktion neu installiert wird. Der Benutzer findet somit in jeder der unterschiedlichen Funktionseinheiten, die er benutzt (und bei dem er sich z.B. anmeldet), stets denselben Soll-Funktionsbestand 16' gemäß der Soll-Bestandsangabe 25 vor.

Es wird also eine zum Beispiel automatisch generierte Soll-Bestandsangabe 25 (beispielsweise ein Soll-Hashwert), die den Auslieferungszustand oder den gekauften Funktionsumfang der Funktionseinheit beschreibt, in einem Blockchain-Guthabenkonto 24 abgelegt oder gespeichert. Diese Soll-Bestandsangabe 25 (zum Beispiel der Soll-Hashwert) kann aufgrund des Konzepts der Blockchain-Technologie nicht oder nur unter erheblichem Aufwand manipuliert werden. Wird für die Funktionseinheit 10 ein neues Function-on-Demand-Produkt erworben, also eine vorinstallierte Funktion 14 freigeschaltet und/oder eine installierbare Funktion 15 neu installiert, so wird automatisch eine aktualisierte Soll-Bestandsangabe 25 (also beispielsweise ein aktualisierter Soll-Hashwert) erzeugt und in dem Blockchain-Guthabenkonto 24 abgespeichert.

Die Funktionseinheit 10 generiert dann gemäß dem Verfahren in vorbestimmten Zeitabständen oder zu vorbestimmten Zeitpunkten (zum Beispiel definiertes zeitliches Intervall und/oder bei nächster Möglichkeit eine Online-Verbindung) eine Ist-Bestandsangabe 26 (zum Beispiel einen Ist-Hashwert), die alle aktuell in der Funktionseinheit 10 freigeschalteten und aktivierten Funktionen als Funktionsbestand 16 beschreibt. Es kann dann diese Ist-Bestandsangabe 26 mit der Soll-Bestandsangabe 25 verglichen werden.

Bei einer Abweichung zwischen diesen Bestandsangaben werden die unerlaubten, nicht autorisierten Funktionen deaktiviert (Forcierungsmaßnahme 27 gemäß einer Ausführungsform). Aus Sicherheitsgründen wird die Deaktivierung bevorzugt nur in einem Ruhezustand 28 der Funktionseinheit 10 durchgeführt. Bei dem Kraftfahrzeug kann dies beispielsweise ein stehender Zustand sein. Daraufhin versendet beispielsweise die Steuereinrichtung 18 bevorzugt eine Nachricht 29 an die Servereinrichtung 19' beispielsweise des Herstellers der Funktionseinheit. In der Mitteilung können alle relevanten Positionen (welche Funktion abweicht, Zeitstempel, um nur Beispiele zu nennen) beinhaltet sein. Es kann dann geprüft werden, ob tatsächlich eine unerlaubt oder nicht autorisierte Funktion von der Funktionseinheit 10 genutzt wird und beispielsweise rechtliche Schritte bei tatsächlichem Verstoß gegen die Zulässigkeitsbedingung 17 eingeleitet werden.

Eine Bestandsangabe kann beispielsweise eine Identifikationsnummer der Funktionseinheit (beispielsweise eine Fahrzeugidentifikationsnummer VIN) enthalten. Dies ist dann also eine auf die Funktionseinheit bezogene Bestandsangabe. Das Blockchain-Guthabenkonto 24 ist dann ein für die Funktionseinheit spezifisches Guthabenkonto. Es kann aber auch vorgesehen sein, dass die Soll-Bestandsangabe 25 sich auf einen Benutzer bezieht und somit das Blockchain-Guthabenkonto 24 ein benutzerbezogenes Konto ist. Die Soll-Bestandsangabe 25 gibt dann also beispielsweise im Rahmen eines Abonnement-Modells (Abo-Modells) sämtliche vom Benutzer in unterschiedlichen Funktionseinheiten nutzbare Funktionen an, für die er schon einmal bezahlt hat. Er kann aber auch die Funktionseinheit 10 durch eine andere Funktionseinheit austauschen oder wechseln und wird dann dabei unterstützt, in der neuen Funktionseinheit ebenfalls den Soll-Funktionsbestand 16' bereitgestellt zu bekommen. Die entsprechend dem Abo oder allgemein im Blockchain-Guthabenkonto 24 angegebenen Funktionen gemäß dem Soll-Funktionsbestand 16' können in der jeweils genutzten Funktionseinheit aktiviert werden.

Das heißt, es ist egal, welche Funktionseinheit der Benutzer benutzt, also in welches Kraftfahrzeug er beispielsweise einsteigt, denn er bekommt dennoch den Soll-Funktionsbestand 16' bereitgestellt oder aktiviert, für den er für den aktuellen Zeitraum bezahlt hat (beispielsweise Bereitstellung einer Matrix-Scheinwerferfunktion). Der Benutzer muss sich dazu nur an der Funktionseinheit anmelden. Wird dagegen mit derselben Funktionseinheit ein anderer Benutzer, der diesen Soll-Funktionsbestand 16' nicht gebucht oder bezahlt hat, an der Funktionseinheit angemeldet, so wird der Funktionsbestands bei Benutzung durch diesen Benutzer in der Funktionseinheit durch die Forcierungsmaßnahme deaktiviert.

Die Blockchain-Technologie ermöglicht es somit, den Einsatz von Function-on-Demand in Funktionseinheiten, wie beispielsweise Kraftfahrzeugen, manipulationssicher einzusetzen. Manipulationsmöglichkeiten werden dadurch erschwert. Eine unbezahlte Verwendung einer Funktion wird somit unterbunden.

Zudem kann beispielsweise auch im Rahmen einer Kurzzeitmiete (beispielsweise bei einer Fahrzeugvermietung) vom Benutzer als Mieter der Funktionseinheit eine hinzugebuchte Funktion ad hoc verifiziert und damit aktiviert werden. Die Gültigkeit einer Ausstattung ist für ein bestimmtes Zeitfenster mittels der Soll-Bestandsangabe 25 verifizierbar.

Indem als Bestandsangabe jeweils ein Hashwert verwendet wird, ist die Menge der zu sendenden Daten für die Verifizierung oder Überprüfung des Funktionsbestands 16 minimal oder gering.

Abschließend ist zu erwähnen, dass das Verfahren also zwei Aspekte hat. Zum einen den Aspekt Absicherung im Fahrzeuggeschäft für Function-on-Demand-Funktionalität (die sich für Kraftfahrzeuge und alle Maschinen oder allgemein Funktionseinheiten verwenden lässt, die in einem bestimmten Auslieferungszustand übergeben werden und/oder nachträglich modifiziert werden können) und der Aspekt in Richtung Kunden- oder Benutzerdaten für eine Personalisierung des Funktionsbestands 16 für einen Benutzer. Insgesamt zeigen die Beispiele, wie durch die Erfindung eine Function-on-Demand-Funktionalität via Blockchain-Technologie abgesichert werden kann.

## Patentansprüche

1. Verfahren zum Festlegen eines Funktionsbestands (16) einer Funktionseinheit (10), wobei in der Funktionseinheit (10) zumindest eine bereits installierte Funktion (14) freischaltbar und damit jeweils aktivierbar ist und/oder zumindest eine Funktion (15) nachinstallierbar und damit jeweils aktivierbar ist und wobei der Funktionsbestand (16) der Funktionseinheit (10) die Menge der tatsächlich aktivierten Funktionen darstellt, wobei bei dem Verfahren einmal oder wiederholt
- durch eine Steuereinrichtung (18) der Funktionseinheit (10) der aktuelle Funktionsbestand (16) der Funktionseinheit (10) ermittelt und zu dem aktuellen Funktionsbestand (16) eine Ist-Bestandsangabe (26) erzeugt wird, welche den ermittelten Funktionsbestand (16) beschreibt, und
- bei einer externen Servereinrichtung (19) aus einem vorbestimmten Blockchain-Guthabenkonto (24) eine Soll-Bestandsangabe (25) betreffend einen Soll-Funktionsbestand (16') abgefragt wird;
**dadurch gekennzeichnet, dass**
- für den Fall, dass sich die ermittelte Ist-Bestandsangabe (26) von der Soll-Bestandsangabe (25) unterscheidet, eine vorbestimmte Forcierungsmaßnahme (27) zum Vorgeben des Soll-Funktionsbestands (16') ausgelöst wird,
wobei die Forcierungsmaßnahme (27) umfasst, dass für den Fall, dass erkannt wird, dass eine neue, von der Soll-Bestandsangabe (25) ausgeschlossene neue Funktion in der Funktionseinheit (10) freigeschaltet und/oder neu installiert und damit jeweils aktiviert wurde, eine Nachricht (29) betreffend eine unzulässige Aktivierung der neuen Funktion und/oder betreffend die neue Funktion an eine vorbestimmte, externe Empfangsstelle (19') ausgesendet wird, und
wobei als Funktionseinheit (10) ein Kraftfahrzeug betrieben wird.

2. Verfahren nach Anspruch 1, wobei zumindest einmal als Soll-Bestandsangabe (25) eine für die Funktionseinheit (10) spezifische, benutzerunabhängige Soll-Bestandsangabe (25) bei einem Blockchain-Guthabenkonto (24) der Funktionseinheit (10) abgefragt wird.

3. Verfahren nach einem der vorhergehenden Ansprüche, wobei zumindest einmal als Soll-Bestandsangabe (25) eine benutzerspezifische, für mehrere Funktionseinheiten (10) gültige Soll-Bestandsangabe (25) bei einem Blockchain-Guthabekonto (24) eines Benutzers der Funktionseinheit (10) abgefragt wird.

4. Verfahren nach einem der vorhergehenden Ansprüche, wobei die Forcierungsmaßnahme (27) umfasst, dass für den Fall, dass erkannt wird, dass eine neue, von der Soll-Bestandsangabe (25) ausgeschlossene neue Funktion in der Funktionseinheit (10) freigeschaltet und/oder neu installiert und damit jeweils aktiviert wurde, diese neue Funktion oder der aktuelle Funktionsbestand (16) oder die Funktionseinheit (10) deaktiviert wird.

5. Verfahren nach einem der vorhergehenden Ansprüche, wobei für den Fall, dass eine bisher vom aktuellen Funktionsbestand (16) ausgeschlossene neue Funktion unter Einhaltung einer vorbestimmten Zulässigkeitsbedingung (17) freigeschaltet und/oder neu installiert und damit jeweils aktiviert wird, eine aktualisierte Soll-Bestandsangabe (25) erzeugt und in dem Blockchain-Guthabenkonto (24) abgespeichert wird.

6. Verfahren nach einem der vorhergehenden Ansprüche, wobei die Forcierungsmaßnahme (27) erst bei Erkennen eines vorbestimmten Ruhezustands (28) der Funktionseinheit (10) durchgeführt wird.

7. Verfahren nach einem der vorhergehenden Ansprüche, wobei das Erzeugen der Ist-Bestandsangabe (26) und/oder das Abfragen der Soll-Bestandsangabe (25) wiederholt zu vorbestimmten Zeitpunkten durchgeführt wird, wobei sich zumindest ein Zeitpunkt ergibt, falls eine Online-Verbindung (20) besteht und/oder die Funktionseinheit (10) in Betrieb genommen wird und/oder ein vorbestimmtes Zeitintervall vergangen ist und/oder eine Zufallsfunktion ein vorbestimmtes Ergebnis erzeugt.

8. Verfahren nach einem der vorhergehenden Ansprüche, wobei die Ist-Bestandsangabe (26) und die Soll-Bestandsangabe (25) jeweils ein Hashwert ist, der zu einer jeweiligen Funktionsliste erzeugt wird.

9. Funktionseinheit (10), die dazu eingerichtet ist, dass in der Funktionseinheit (10) zumindest eine bereits installierte Funktion (14) freischaltbar und damit jeweils aktivierbar ist und/oder zumindest eine Funktion (15) nachinstallierbar und damit jeweils aktivierbar ist, wobei ein Funktionsbestand (16) der Funktionseinheit (10) die Menge der tatsächlich aktivierten Funktionen darstellt,
**dadurch gekennzeichnet, dass**
die Funktionseinheit (10) dazu eingerichtet ist, ein Verfahren nach einem der vorhergehenden Ansprüche durchzuführen.

## Claims

1. Method for determining an inventory of functions (16) of a functional unit (10), wherein in the functional unit (10) at least one already installed function (14) can be unlocked and therewith can in each case be activated and/or at least one function (15) can be installed after the fact and therewith can in each case be activated and wherein the inventory of functions (16) of the functional unit (10) represents the quantity of the actually activated functions, wherein in the method once or repeatedly
- by means of a control device (18) of the functional unit (10) the current inventory of functions (16) of the functional unit (10) is determined and an actual inventory specification (26) is generated regarding the current inventory of functions (16) which describes the determined inventory of functions (16), and
- in the case of an external server device (19) a target inventory specification (25) concerning a target inventory (16') of functions is requested from a prespecified block chain credit account (24);
**characterised in that**
- for the case that the determined actual inventory specification (26) differs from the target inventory specification (25), a predetermined promotional measure (27) is triggered for the specification of the target inventory (16') of functions,
wherein the promotional measure (27) includes that for the case that it is detected that a new function, excluded from the target inventory specification (25), in the functional unit (10) was unlocked and/or newly installed and therewith in each case activated, a message (29) regarding an inadmissible activation of the new function and/or regarding the new function is sent to a predetermined external receiving point (19'), and
wherein a motor vehicle is operated as a functional unit (10).

2. Method according to claim 1, wherein at least once as a target inventory specification (25) a user-independent target inventory specification (25), specific for the functional unit (10), is requested at a block chain credit account (24) of the functional unit (10).

3. Method according to any of the preceding claims, wherein at least once as a target inventory specification (25) a user-specific target inventory specification (25) valid for several functional units (10) is requested at a block chain credit account (24) of a user of the functional unit (10).

4. Method according to any of the preceding claims, wherein the promotional measure (27) includes that for the case that it is recognised that a new function, excluded from the target inventory specification (25), in the functional unit was unlocked and/or newly installed and therewith in each case activated, this new function or the actual inventory of functions (16) or the functional unit (10) is deactivated.

5. Method according to any of the preceding claims, wherein for the case that a new function, excluded until now from the actual inventory of functions (16), is unlocked in compliance with a predetermined admissibility condition (17) and/or is newly installed and therewith in each case activated, and actualised target inventory specification (25) is generated and is stored in the block chain credit account (24).

6. Method according to any of the preceding claims, wherein the promotional measure (27) is carried out only at the recognition of a predetermined resting state (28) of the functional unit (10).

7. Method according to any of the preceding claims, wherein the generation of the actual inventory specification (26) and/or the requesting of the target inventory specification (25) is carried out repeatedly at predetermined time points, wherein at least one time point results in the case that an online connection (20) exists and/or the functional unit (10) is brought into operation and/or a predetermined time interval has elapsed and/or a random function generates a predetermined result.

8. Method according to any of the preceding claims, wherein the actual inventory specification (26) and the target inventory specification (25) is in each case a hash value which is generated for a respective function list.

9. Functional unit (10) which is configured such that in the functional unit (10) at least one already installed function (14) is able to be unlocked and therewith in each case activated and/or at least one function (15) can be installed after the fact and therewith is in each case able to be activated, wherein an inventory of functions (16) of the functional unit (10) shows the quantity of the actually activated functions,
**characterised in that**
the functional unit (10) is configured to carry out a method according to any of the preceding claims.

## Revendications

1. Procédé de détermination d'un inventaire fonctionnel (16) d'une unité fonctionnelle (10), dans lequel, dans l'unité fonctionnelle (10), au moins une fonction (14) déjà installée est commutable et ainsi respectivement activable et/ou au moins une fonction (15) est installable ultérieurement et ainsi respectivement activable et dans lequel l'inventaire fonctionnel (16) de l'unité fonctionnelle (10) représente la quantité des fonctions effectivement activées, dans lequel, dans le procédé, une fois ou plusieurs fois,
- l'inventaire fonctionnel (16) actuel de l'unité fonctionnelle (10) est déterminé par un dispositif de commande (18) de l'unité fonctionnelle (10) et une indication d'inventaire réel (26) est générée pour l'inventaire fonctionnel (16) actuel, qui décrit l'inventaire fonctionnel (16) déterminé, et
- une indication d'inventaire de consigne (25) concernant un inventaire fonctionnel de consigne (16') est interrogée auprès d'un dispositif de serveur externe (19) à partir d'un compte de crédit de blockchain (24) prédéterminé ;
**caractérisé en ce que**
- dans le cas où l'indication d'inventaire réel (26) déterminée diffère de l'indication d'inventaire de consigne (25), une mesure de forçage (27) prédéterminée est déclenchée pour spécifier l'inventaire fonctionnel de consigne (16'),
dans lequel la mesure de forçage (27) comprend que, dans le cas où il est détecté qu'une nouvelle fonction exclue de l'indication d'inventaire de consigne (25) a été activée et/ou nouvellement installée dans l'unité fonctionnelle (10) et ainsi respectivement activée, un message (29) concernant une activation inadmissible de la nouvelle fonction et/ou concernant la nouvelle fonction est transmis à une station de réception externe (19') prédéterminée, et
dans lequel un véhicule automobile est utilisé en tant qu'une unité fonctionnelle (10).

2. Procédé selon la revendication 1, dans lequel une indication d'inventaire de consigne (25) indépendante de l'utilisateur et spécifique à l'unité fonctionnelle (10) est interrogée au moins une fois en tant qu'indication d'inventaire de consigne (25) sur un compte de crédit de blockchain (24) de l'unité fonctionnelle (10).

3. Procédé selon l'une quelconque des revendications précédentes, dans lequel une indication d'inventaire de consigne (25) spécifique à l'utilisateur et valable pour plusieurs unités fonctionnelles (10) est interrogée au moins une fois en tant qu'indication d'inventaire de consigne (25) auprès d'un compte de crédit de blockchain (24) d'un utilisateur de l'unité fonctionnelle (10).

4. Procédé selon l'une quelconque des revendications précédentes, la mesure de forçage (27) comprenant que dans le cas où il est détecté qu'une nouvelle fonction exclue de l'indication d'inventaire de consigne (25) a été activée et/ou nouvellement installée dans l'unité fonctionnelle (10) et ainsi respectivement activée, cette nouvelle fonction ou l'inventaire fonctionnel (16) actuel ou l'unité fonctionnelle (10) étant désactivé.

5. Procédé selon l'une quelconque des revendications précédentes, dans lequel, dans le cas où une nouvelle fonction précédemment exclue de l'inventaire fonctionnel (16) actuel est activée et/ou nouvellement installée et ainsi respectivement activée tout en respectant une condition d'admissibilité (17) prédéterminée, une indication d'inventaire de consigne (25) actualisée est générée et enregistrée dans le compte de crédit de blockchain (24).

6. Procédé selon l'une quelconque des revendications précédentes, dans lequel la mesure de forçage (27) est exécutée uniquement lorsqu'un état de repos (28) prédéterminé de l'unité fonctionnelle (10) est détecté.

7. Procédé selon l'une quelconque des revendications précédentes, dans lequel la génération de l'indication d'inventaire réel (26) et/ou l'interrogation de l'indication d'inventaire de consigne (25) est effectuée de manière répétée à des moments prédéterminés, dans lequel au moins un moment se produit si une connexion en ligne (20) existe et/ou si l'unité fonctionnelle (10) est mise en service et/ou si un intervalle de temps prédéterminé s'est écoulé et/ou si une fonction aléatoire génère un résultat prédéterminé.

8. Procédé selon l'une quelconque des revendications précédentes, dans lequel l'indication d'inventaire réel (26) et l'indication d'inventaire de consigne (25) sont respectivement une valeur de hachage qui est générée pour une liste de fonctions respective.

9. Unité fonctionnelle (10), qui est configurée de sorte qu'au moins une fonction (14) déjà installée est activable dans l'unité fonctionnelle (10) et ainsi respectivement activable et/ou au moins une fonction (15) est installable ultérieurement et ainsi respectivement activable, un inventaire fonctionnel (16) de l'unité fonctionnelle (10) représentant la quantité des fonctions effectivement activées,
**caractérisé en ce que**
l'unité fonctionnelle (10) est configurée pour effectuer un procédé selon l'une quelconque des revendications précédentes.
